# EUROPÄISCHE PATENTSCHRIFT

(11) **EP 0 603 453 B1**
(45) Veröffentlichungstag und Bekanntmachung des Hinweises auf die Patenterteilung: **23.10.1996**
(21) Anmeldenummer: 93100113.5
(22) Anmeldetag: 07.01.1993
(51) Int. Cl.: F16H 57/12, F16H 1/22

(54) **Verfahren zur Geräuschverminderung an einem Getriebe und Getriebe zur Durchführung dieses Verfahrens**
Method for noise reduction in a transmission and transmission using this method
Méthode de réduction de bruit pour une transmission et transmission pour l'application

(30) Priorität: 19.12.1992 EP 92121665
(43) Veröffentlichungstag der Anmeldung: 29.06.1994
(73) Patentinhaber: MAAG GETRIEBE AG, CH-8005 Zürich (CH)
(72) Erfinder: Deeg, Thomas, Dipl.-Ing. ETH, CH-8472 Seuzach (CH)
(74) Vertreter: Troesch Scheidegger Werner AG

(56) Entgegenhaltungen:
- EP-A- 0 300 905
- AU-B- 413 458
- DE-A- 2 925 833
- DE-A- 3 018 610
- DE-A- 3 704 787
- FR-A- 2 629 172
- GB-A- 2 202 300
- MAAG-Taschenbuch, Seiten IV,V und 224-227, 2.Auflage 1985

## Beschreibung

Die vorliegende Erfindung betrifft ein Verfahren zur Geräuschverminderung an einem Getriebe für Leistungsübertragung mit mindestens je einer An- und einer Abtriebswelle und mindestens einer Leistungsverzweigung durch mindestens zwei Zwischenwellen, wobei die an den Zwischenwellen angebrachten Zahnräder derart gegeneinander verdreht eingestellt werden, dass die Drehspiele im geschlossenen Zahnräderzug eliminiert werden sowie ein Getriebe zur Durchführung dieses Verfahrens mit mindestens je einer An- und einer Abtriebswelle und mindestens einer Leistungsverzweigung durch mindestens zwei Zwischenwellen, wobei die an den Zwischenwellen angebrachten Zahnräder derart gegeneinander verdreht angeordnet sind, dass die Drehspiele im geschlossenen Zahnräderzug eliminiert sind.

Eine Getriebebauart mit Leistungsverzweigung wird insbesondere dort gewählt, wo grosse Leistungen auf kleinem Raum übertragen werden sollen. Dabei wird der kompliziertere Aufbau im Vergleich zu einem nicht verzweigten Getriebe in Kauf genommen. Es stellt sich bei einem solchen Aufbau insbesondere das Problem, dass ein Lastausgleich unter den Zwischenwellen gefunden werden muss, damit diese Zwischenwellen auch annähernd dieselbe Leistung übertragen. Dieser Lastausgleich wird zum Beispiel dadurch realisiert, dass die Zwischenwellen torsionselastisch sind, d.h. dass sich die beiden Zahnräder am Ende einer Zwischenwelle gegeneinander verdrehen können. Diese Lösung ist befriedigend für ständig unter Last stehende Getriebestufen. Wenn nun aber Getrieberäder unbelastet mitlaufen, weil z.B. eine Antriebsmaschine abgekuppelt ist, die Abtriebswelle aber immer noch dreht oder von einer anderen Antriebsmaschine angetrieben wird, so kommt es in Folge von Drehschwingungen im Antriebsstrang zum Abheben der Zahnflanken bei den unbelasteten Rädern. Dieses sogenannte Getriebehämmern, eine Drehschwingung von Rädern innerhalb ihres Zahnspieles, erzeugt einerseits einen starken Lärm und führt andererseits zur Beschädigung der Verzahnung des Getriebes.

Ein spielfreies Getriebe mit zwei Zwischenwellen ist aus GB 2202300 bekannt. Die Aufhebung des Drehspieles erfolgt dabei in Einbau- und Wirkstellung des Getriebes durch Verdrehen eines der Zahnräder einer Zwischenwelle gegenüber dieser Zwischenwelle. Mit dieser Konstruktion kann das Drehspiel des Getriebes aufgehoben werden. Das Getriebe kann eine beinahe spielfreie Drehbewegung ausführen, aber keine positive Leistungsübertragung mit Leistungsverzweigung.

Aus der DE-A-29 25 833 ist ein spielfreies Getriebe mit zwei Zwischenwellen für einen Stellmotor bekannt. Dabei sind die Zwischenwellen als Torsionswellen ausgebildet und werden gegeneinander verspannt. Die Verspannung hat den Zweck, dass die Aufhebung des Drehspieles praktisch automatisch durch die Verspannkraft (auch im Falle von Verschleiss) nachgeführt wird. Das in dieser Schrift offenbarte Getriebe eignet sich allerdings nicht für die Leistungsübertragung, da nur eine der Zwischenwellen die Leistung überträgt, die andere Zwischenwelle dient lediglich der Verspannung der Zahnräder und damit der Aufhebung des Zahnspieles.

Eine gattungsgemäßes Verfahren ist in FR-A-2 629 172 beschrieben. Dabei wird zur Aufhebung des Drehspieles vorgeschlagen, lediglich ein beliebiges Achselement des Getriebes als drehelastisches Element auszubilden. Für die Aufhebung des Spielses wird darauf verwiesen, dass das Verspannmoment der Zwischenwellen grösser als das grösste zu übertragende Drehmoment sein soll. Auch damit wird die Leistung nur über eine der beiden Zwischenwellen übertragen, die zweite Zwischenwelle dient lediglich als Mittel zur Aufhebung des Zahnspiels.

Die Aufgabe der vorliegenden Erfindung bestand nun darin, ein Verfahren und ein Getriebe nach diesem Verfahren sowohl für den Last- wie für den Freilauf zu finden, welches eine optimale Leistungsübertragung bei Leistungsverzweigung gewährleistet.

Diese Aufgabe wird dadurch gelöst, dass Zwischenwellen mit unterschiedlicher Verdrehsteifigkeit eingesetzt werden und derart paarweise gegeneinander verspannt werden, dass bei der Leistungsübertragung die Leistungsverzweigung auf beide Zwischenwellen erfolgt, wobei das Verspannmoment einen Bruchteil des zu übertragenden Drehmomentes beträgt. Damit können sich die Zahnflanken im Freilauf auch bei Schwingungsanregungen nicht voneinander lösen, womit einerseits die Geräuschentwicklung und andererseits der dadurch verursachte mögliche Verschleiss verhindert werden. Die für die Leistungsübertragung gewünschte Leistungsverzweigung auf die Zwischenwellen wird dadurch erreicht, dass die Zwischenwellen unterschiedliche Verdrehsteifigkeiten aufweisen. Damit werden die Drehspiele sowie das Verspannmoment beim Leistungsbetrieb wieder kompensiert.

Vorzugsweise ist ein Getriebe zur Durchführung des erfindungsgemässen Verfahrens vorgesehen, bei welchem die Zwischenwellen unterschiedliche Verdrehsteifigkeit aufweisen und derart paarweise gegeneinander verspannt sind, dass bei der Leistungsübertragung die Leistungsverzweigung auf beide Zwischenwellen erfolgt.

Eine bevorzugte Ausführungsform der Erfindung sieht vor, dass die antriebsseitigen Zahnräder der Zwischenwellen paarweise voneinander weg verspannt sind, und dementsprechend die abtriebsseitigen Zahnräder der Zwischenwellen paarweise zueinander hin verspannt sind.

Eine weitere bevorzugte Ausführungsform sieht vor, dass die Zwischenwellen untereinander unterschiedliche Durchmesser aufweisen.

Dadurch, das Verspannmoment einen Bruchteil des zu übertragenden Drehmomentes beträgt wird erreicht, dass das Getriebe, wenn es nicht unter Last läuft, durch die Verspannung spielfrei vorgespannt ist und es damit nicht zum Gegeneinanderschlagen der Zahnflanken untereinander kommt. Sobald jedoch die Antriebswelle unter Last steht, werden die Zahnräder in Laufrichtung derart gegen die geringe Vorspannung verschoben, dass bei allen Zwischenwellen die Zahnräder in Drehrichtung Last übertragen. Diese Getriebeausführung eignet sich insbesondere in Antrieben, bei welchen mehrere Antriebsmaschinen auf einen Abtriebsstrang einwirken, wobei die Antriebsmaschinen mit Kupplungen nach Bedarf zu- oder abgeschaltet werden können. Hier kommt es zu den eingangs erwähnten Problemen bei den frei, ohne Last mitlaufenden Getriebebereichen. Diese Probleme werden insbesondere dann verstärkt, wenn Schwingungen eines Antriebes auf das Getriebe übertragen werden, wie es beispielsweise durch grosse Dieselaggregate bei Schiffsantrieben auftritt.

Vorzugsweise eignet sich ein erfindungsgemässes Getriebe in Schiffsantrieben. Gerade dort sind häufig mehrere Antriebsmaschinen vorgesehen, welche auf eine Abtriebswelle mit einer Schraube wirken. Dabei werden häufig auch Dieselmotoren eingesetzt, welche insbesondere starke Drehschwingungen auf den Antriebsstrang aufbringen. Durch die Verwendung eines erfindungsgemässen Getriebes kann sogar auf spezielle Schwingungsdämpfende Massnahmen wie beispielsweise Flüssigkeitskupplungen verzichtet werden.

Ein Ausführungsbeispiel der vorliegenden Erfindung wird nachstehend anhand von Zeichungen noch näher erläutert. Es zeigen
Fig. 1 schematisch die Aufsicht auf ein Getriebe mit Leistungsverzweigung;
Fig. 2 die Ansicht der Verzahnung eines Getriebes nach Fig. 1 nach herkömmlicher Art;
Fig. 3 ein Detail der Verzahnung von Fig.2;
Fig. 4 die Ansicht der erfindungsgemässen Verzahnung eines Getriebes nach Fig. 1;
Fig. 5 ein Detail der Verzahnung von Fig. 4;
Fig. 6 ein Drehmomentdiagramm des Getriebes;
Fig. 7 zeigt eine herkömmliche Antriebsmaschinenanordnung von Schiffsantrieben;
Fig. 8 zeigt eine Antriebsmaschinenanordnung mit erfindungsgemässem Getriebe.

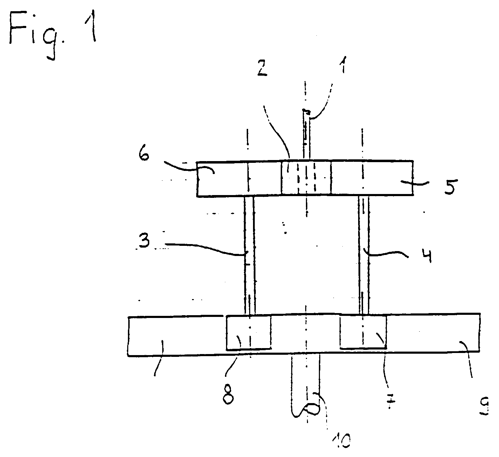

Der Aufbau eines Getriebes mit Leistungsverzeweigung ist in Figur 1 schematisch dargestellt. Eine Antriebswelle 1 treibt über ein Zahnrad 2 zwei Zwischenwellen 3,4 über die an einem Ende angebrachten Zahnräder 5,6 an. Die Zwischenwellen 3,4 sind ihrerseits mit den Zahrädern 7,8 mit dem Zahnrad 9 der Abtriebswelle 10 verbunden. Damit unter Last auch alle Zahnräder im Eingriff stehen, erfolgt ein Ausgleich über die Torsionselastizität der beiden Zwischenwellen 3,4.

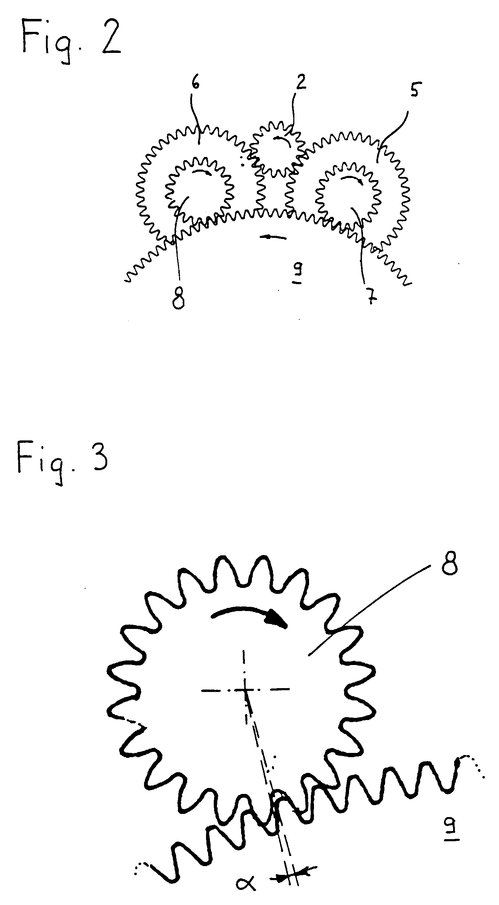

In Figur 2 ist das Getriebe in der Frontansicht dargestellt, wodurch die Zahnflankenstellung ersichtlich ist, wie sie herkömmlicherweise bei solchen Getrieben eingestellt wird. In der durch die Pfeile dargestellten Drehrichtung wird die Antriebskraft von der Antriebswelle gleichmässig über die Zwischenwellen auf die Abtriebswelle übertragen. Es ist ersichtlich, dass im Ruhezustand des Getriebes nun ein Spiel, das normale Zahnspiel, vorhanden ist. In Fig. 3 ist das Zahnflankenspiel α zwischen dem Zahnrad 8 und 9 dargestellt. D.h. jede der Wellen lässt sich gegenüber den anderen um das Zahnflankenspiel verdrehen. Wenn nun beispielsweise das Zahnrad 9 angetrieben wird, so laufen die Zahnräder 5,6,7,8 und 2 des Getriebes frei mit. Wenn nun Drehschwingungen auftreten, beispielsweise hervorgerufen durch Schwingungen im Abtriebsstrang, so lösen sich die sich berührenden Zahnflanken kurzzeitig ab, um danach wieder in Kontakt zu treten, resp. berühren sich mit den gegenüberliegenden Zahnflanken. Diese Bewegungen führen einerseits zu starker Lärmentwicklung und andererseits zu einem Verschleiss der Zahnflanken selbst. Durch den Verschleiss wird das Spiel zusätzlich vergrössert und der Effekt verstärkt. Dieses Phänomen ist unter dem Namen "Getriebehämmern" allgemein bekannt und gefürchtet.

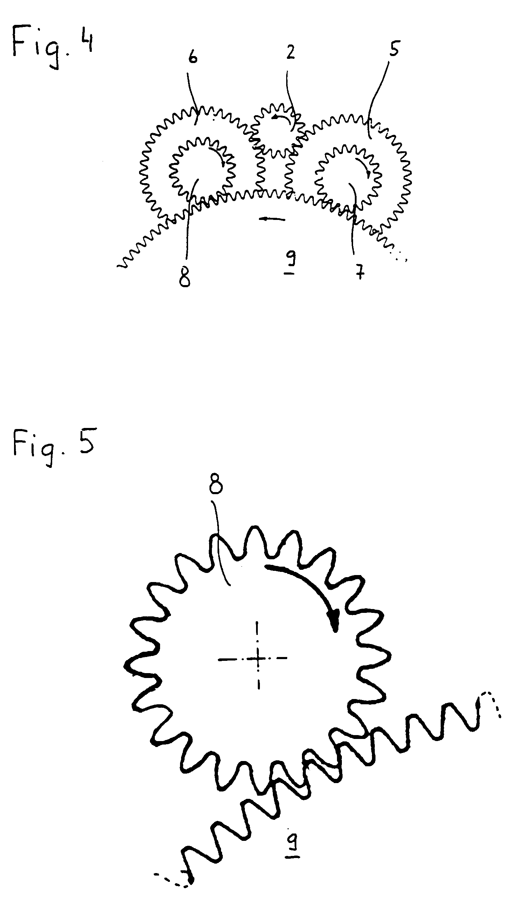

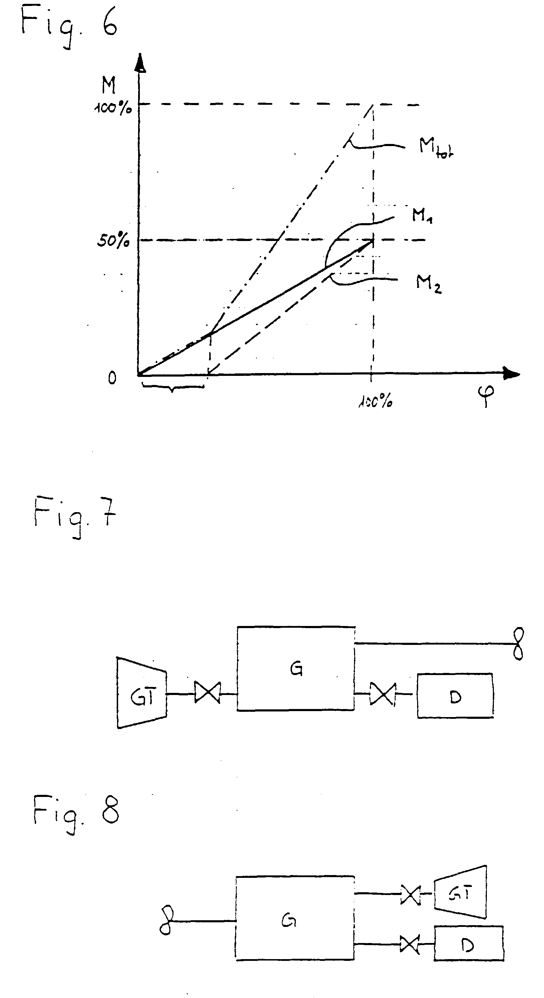

Um nun dieses Abheben der Zahnflanken im Leerlaufbetrieb zu unterbinden, ist es erfindungsgemäss vorgesehen, die Zahnräder der Zwischenwellen derart zu verspannen, dass sich beispielsweise die Zahnflanken des Zahnrades 8 der einen Zwischenwelle 3 entgegen der vorgesehenen Laufrichtung mit den Zahnflanken des Zahnrades 9 der Abtriebswelle in Berührung stehen, und umgekehrt die Zahnflanken des Zahnrades 7 in der vorgesehenen Laufrichtung mit den Zahnflanken des Zahnrades 9 in Berührung stehen, wie in Fig. 4 und im Detail in Fig. 5 dargestellt. Entsprechend steht es mit den Zahnflanken der Zahnräder 5,6 an den anderen Enden der Zwischenwellen und dem Zahnrad 2 der Antriebswelle 1. In dieser Stellung sind nun unabhängig von der Drehrichtung immer alle Zähne der Zahnräder des Getriebes drehspielfrei und belastet im Eingriff. Dadurch erfolgen auch bei Drehschwingungen im Getriebe keine Ablösungen der Zahnflanken, womit auch die damit verbundene Geräuschentwicklung unterbunden wird und die Zahnflanken auch nicht beschädigt werden.

Wird nun über die Antriebswelle 1 ein Drehmoment aufgebracht, so wird hier beispielsweise zuerst das Zahnrad 5 bewegt, dessen Zahnflanken auf der entsprechenden Seite bereits in Eingriff stehen. Da auch das Zahnrad 7 bereits mit der richtigen Zahnflanke mit dem Zahnrad 9 in Eingriff steht, beginnt die Drehbewegung. Da nun die Zwischenwelle 4 eine gewisse Elastizität aufweist, wird auch diese um einen dem Drehmoment entsprechenden Winkel verdreht. Damit gelangen ab einem bestimmten Drehmoment auch die in Drehrichtung zeigenden Zahnflanken des Zahnrades 2 der Antriebswelle mit dem Zahnrad 6 der zweiten Zwischenwelle 3 in Eingriff, und beginnen auch über diese Zwischenwelle sowie Zahnrad 8 in die gewünschte Drehrichtung Drehmoment zu übertragen. Letztendlich stehen nun wieder alle Zahnflanken in der für die Übertragung des Drehmomentes richtigen Stellung (wie in Fig. 2 dargestellt). Sobald das Drehmoment der Antriebswelle 1 wieder weggenommen wird, so werden die Zahnräder wieder in die in Figur 4 dargestellten Positionen zurückdrehen.

In Figur 6 ist ein Drehmomentdiagramm dieser Anordnung dargestellt. Dabei wird der Drehmomentverlauf M im Verhältnis zur relativen Verdrehung ϕ der Zwischenwellen dargestellt. Wenn nun die Antriebswelle an das Antriebsaggregat gekuppelt wird, wird das Drehmoment von 0% langsam gesteigert. Zuerst wird dabei das Getriebe nur über die Zahnräder 5 und 7 betrieben. Dabei wird die Zwischenwelle 4 mit zunehmendem Drehmoment M₁ entsprechend ihrer Steifigkeit verdreht. Die Zahnräder der anderen Zwischenwelle 3 laufen gleichfalls mit, stehen aber noch nicht unter Last. Erst wenn das Drehmoment soweit gesteigert wurde, dass sowohl die Vorspannverdrehung wie auch das Zahnflankenspiel überwunden ist, beginnt auch dieser zweite Getriebestrang einen Teil des Drehmomentes M₂ zu übertragen. Idealerweise wird nun die Torsionssteifigkeit der beiden Wellen derart unterschiedlich gewählt, dass beide Wellen beim Nenndrehmoment M 100% jeweils denselben Drehmomententeil M₁ = M₂ übertragen. Dies kann beispielsweise dadurch erreicht werden, dass der Durchmesser der ersten unter Last stehenden Zwischenwelle 4 kleiner als der Durchmesser der zweiten Zwischenwelle 3 gewählt wird.

Da durch diese Art der Verspannung in beiden Drehrichtungen des Getriebes immer jeder Getriebestrang, d.h. jede der beiden Zwischenwellen mit den dazugehörigen Zahnrädern, mit den An- und Abtriebszahnrädern 2 und 9 in bündigem Kontakt stehen, ist auf einfache Weise damit ein im Leerlauf drehspielfreies und vorgespanntes Getriebe realisiert, ohne dass eine spielfreie Verzahnung, welche für Leistungsübertragung nicht geeignet wäre, notwendig ist. Es muss dabei lediglich die im Diagramm der Figur 6 dargestellte Abhängigkeit des Verdrehwinkels der Zwischenwellen vom aufgebrachten Drehmoment Mₜₒₜ bei Leistungsübertragung für die Leistungsaufteilung berücksichtigt werden.

Ein solches Getriebe eignet sich beispielsweise besonders gut für den Einsatz in Schiffsantrieben. Hier werden häufig mehrere Antriebsmaschinen für eine Antriebsschraube eingesetzt. Häufig ist dabei eine Kombination von zwei Gasturbinen oder von einer Gastrubine mit einem Dieselmotor anzutreffen. Dabei wird je nach Betriebszustand entweder nur mit einer oder mit beiden Antriebsmaschinen gefahren. Beim Wechseln der Betriebsart wird dabei eine Antriebsmaschine über eine Synchronisier- oder Schaltkupplung zu- oder abgeschaltet. Dabei tritt nun das eingangs geschilderte Problem auf, dass beim abgeschalteteten Antriebsstrang der zugehörige Getriebeteil ohne Last mitläuft. Herkömmlicherweise musste dabei beispielsweise eine Anordnung der Antriebsmaschinen gewählt werden, wie in Figur 7 schematisch dargestellt. Dabei müssen die Antriebsmaschinen, beispielsweise eine Gasturbine GT und ein Dieselmotor D so angeordnet sein, dass alle entsprechenden Getriebestufen im Getriebe G immer, d.h. auch bei Einzelantrieb, unter Last stehen. Durch diese Anordnung muss der Maschinenraum im Schiffskörper lang gebaut werden, was die Aufteilung der Räume in wasserdichte Abteile wesentlich kompliziert. Damit treten aber Probleme bei der Abdichtung der durch die Trennwände verlaufenden drehenden Wellenteile auf. Weiter muss für den Dieselmotor in der Regel eine Flüssigkeitskupplung vorgesehen werden, damit die durch ihn verursachten Drehschwingungsanregungen gedämpft werden können. Diese Flüssigkeitskupplung bewirkt aber durch ihren Schlupf eine Reduktion der übertragenen Leistung, welche grösser ist als der Verlust durch das Getriebe.

Mittels des erfindungsgemässen Getriebes ist nun eine Anordnung der Antriebsmaschinen möglich, wie in Figur 8 schematisch dargestellt. Dabei können die beiden Antriebsmaschinen, beispielsweise ein Dieselmotor D und eine Gasturbine GT, nebeneinander angeordnet werden und können damit vorteilhafterweise in einem Raum untergebracht werden. Dabei wird auch die Verwendung einer Flüssigkeitskupplung für den Dieselmotor unnötig, womit die dadurch verursachte Leistungseinbusse für den Antrieb vermieden wird.

## Patentansprüche

1. Verfahren zur Geräuschverminderung an einem Getriebe für Leistungsübertragung mit mindestens je einer An- und einer Abtriebswelle (1,10) und mindestens einer Leistungsverzweigung durch mindestens zwei Zwischenwellen (3,4), wobei die an den Zwischenwellen angebrachten Zahnräder (5,6,7,8) derart gegeneinander verdreht eingestellt werden, dass die Drehspiele im geschlossenen Zahnräderzug eliminiert werden, dadurch gekennzeichnet, dass Zwischenwellen (3,4) mit unterschiedlicher Verdrehsteifigkeit eingesetzt werden und derart paarweise gegeneinander verspannt werden, dass bei der Leistungsübertragung die Leistungsverzweigung auf beide Zwischenwellen erfolgt, wobei das Verspannmoment einen Bruchteil des zu übertragenden Drehmomentes beträgt.

2. Getriebe zur Durchführung des Verfahrens nach Anspruch 1 mit mindestens je einer An- und einer Abtriebswelle (1,10) und mindestens einer Leistungsverzweigung durch mindestens zwei Zwischenwellen (3,4), wobei die an den Zwischenwellen angebrachten Zahnräder (5,6,7,8) derart gegeneinander verdreht angeordnet sind, dass die Drehspiele im geschlossenen Zahnräderzug eliminiert sind, dadurch gekennzeichnet, dass die Zwischenwellen (3,4) unterschiedliche Verdrehsteifigkeit aufweisen und derart paarweise gegeneinander verspannt sind, dass bei der Leistungsübertragung die Leistungsverzweigung auf beide Zwischenwellen (3,4) erfolgt.

3. Getriebe nach Anspruch 2, dadurch gekennzeichnet, dass die antriebsseitigen Zahnräder (5,6) der Zwischenwellen paarweise voneinander weg verspannt sind, und dementsprechend die abtriebsseitigen Zahnräder (7,8) der Zwischenwellen paarweise zueinander hin verspannt sind.

4. Getriebe nach Anspruch 2 oder 3, dadurch gekennzeichnet, dass die Zwischenwellen (3,4) untereinander unterschiedliche Durchmesser aufweisen.

5. Verwendung eines Getriebes nach einem der Ansprüche 2 bis 4 in Schiffsantrieben.

## Claims

1. Method for noise reduction in a transmission for power transmission with at least one input shaft (1) and one output shaft (10) and at least one power split through at least two intermediate shafts (3, 4), the gear wheels (5, 6, 7, 8) mounted on the intermediate shafts being set so as to be twisted relative to one another in such a way that the rotary plays in the assembled gear train are eliminated, characterized in that intermediate shafts (3, 4) with different torque stiffness are employed and are biased pairwise relative to one another in such a way that, during power transmission, the power is split between both intermediate shafts, the biasing torque being a fraction of the torque to be transmitted.

2. Transmission for implementing the method according to Claim 1 with at least one input shaft (1) and one output shaft (10) and at least one power split through at least two intermediate shafts (3, 4), the gear wheels (5, 6, 7, 8) mounted on the intermediate shafts being arranged so as to be twisted relative to one another in such a way that the rotary plays in the assembled gear train are eliminated, characterized in that the intermediate shafts (3, 4) have different torque stiffness and are biased pairwise relative to one another in such a way that, during power transmission, the power is split between both intermediate shafts (3, 4).

3. Transmission according to Claim 2, characterized in that the input-side gear wheels (5, 6) of the intermediate shafts are biased pairwise away from one another, and the output-side gear wheels (7, 8) of the intermediate shafts are, accordingly, biased pairwise towards one another.

4. Transmission according to Claim 2 or 3, characterized in that the intermediate shafts (3, 4) have different diameters from one another.

5. Use of a transmission according to one of Claims 2 to 4 in ships' propulsion systems.

## Revendications

1. Procédé de réduction de bruit pour une transmission en vue de la transmission de puissance avec respectivement au moins un arbre menant et un arbre mené (1, 10) et au moins un branchement de puissance par au moins deux arbres intermédiaires (3, 4) les roues dentées (5, 6, 7, 8) fixées sur les arbres intermédiaires étant réglées suivant une torsion les unes contre les autres de façon que les jeux de rotation soient éliminés dans le train fermé des roues dentées, caractérisé en ce que des arbres intermédiaires (3, 4) de rigidité différente en torsion sont utilisés et sont déformés par paires les uns contre les autres de telle sorte que lors de la transmission de puissance, le branchement de puissance a lieu sur les deux arbres intermédiaires, le couple de déformation constituant une fraction du couple de rotation à transmettre.

2. Transmission pour la mise en oeuvre du procédé selon la revendication 1 avec au moins respectivement un arbre menant et un arbre mené (1, 10) et au moins un branchement de puissance par au moins deux arbres intermédiaires (3, 4), les roues dentées (5, 6, 7, 8) montées sur les arbres intermédiaires étant disposées selon une torsion les unes contre les autres de façon que les jeux de rotation, dans le train fermé des roues dentées, soient éliminés, caractérisée en ce que les arbres intermédiaires (3, 4) ont des rigidités en torsion différenteS et sont déformées par paires les uns contre les autres de telle sorte que lors de la transmission de puissance, le branchement de puissance a lieu sur les deux arbres intermédiaires (3, 4).

3. Transmission selon la revendication 2, caractérisée en ce que les roues dentées côté menant (5, 6) des arbres intermédiaires sont déformées par paires au loin les unes des autres et que de façon correspondante les roues dentées côté mené (7, 8) des arbres intermédiaires sont déformées par paires les unes vers les autres.

4. Transmission selon la revendication 2 ou 3, caractérisée en ce que les arbres intermédiaires (3, 4) ont des diamètres différents.

5. Utilisation d'un mécanisme de transmission selon l'une des revendications 2 à 4 dans des dispositifs d'entraînement pour navires.
